# EUROPEAN PATENT SPECIFICATION

(11) **EP 1 033 854 B1**
(45) Date of publication and mention of the grant of the patent: **14.12.2005**
(21) Application number: 00104427.0
(22) Date of filing: 03.03.2000
(51) Int. Cl.: H04L 29/06, G06F 17/60

(54) **System and method for anonymous access to the internet**
Vorrichtung und Verfahren für anonymen Zugang zum Internet
Système et procédé pour accès anonyme à internet

(30) Priority: 04.03.1999 US 261102
(43) Date of publication of application: 06.09.2000
(73) Proprietor: PITNEY BOWES INC., Stamford, Connecticut 06926-0700 (US)
(72) Inventor: Doeberl, Terrence M., West Redding, Connecticut 06896 (US); Gillespie, Edward J., Trumbull, Connecticut 06611 (US); Parkos, Maria P., Southbury, Connecticut 06488 (US); Prakash, Suti, Stamford, Connecticut 06903 (US); Martin, Judith A., Stamford, Connecticut 06903 (US); Macdonald, Marcy F., Shelton, Connecticut 06484 (US); Porter, Paul M., Southbury, Connecticut 06488 (US)
(74) Representative: HOFFMANN EITLE

(56) References cited:
- US-A- 5 557 518
- KRISTOL ET ALL: "Design and Implementation of the Lucent Personalized Web Assistant (LPWA)" INFORMATION SCIENCES RESEARCH CENTER, BELL LABORATORIES, [Online] 10 June 1998 (1998-06-10), pages 1-19, XP002231196 Retrieved from the Internet: <URL:http://citeseer.nj.nec.com/cache/pape rs/cs/2006/http:zSzzSzwww.math.tau.ac.ilzS z~matiaszSzpaperszSzlpwa.pdf/kristol98desi gn.pdf> [retrieved on 2003-02-14]
- STEVEN LOW ET ALL: "Anonymous Credit Cards" AT&T BELL LABORATORIES, [Online] 2 November 1994 (1994-11-02), pages 1-10, XP002231198 Retrieved from the Internet: <URL:http://citeseer.nj.nec.com/cache/pape rs/cs/6084/http:zSzzSzwww.cs.indiana.eduzS zlzSzwwwzSzclasseszSzb649-stolzSzpaperszSz anonymous-credit-cards-conf.pdf/low94anony mou.pdf> [retrieved on 2003-02-14]
- JUSTIN BOYAN: "The Anonymizer - Protecting User Privacy on the Web" ONLINE CITATION, [Online] 1997, pages 1-6, XP002231197 Retrieved from the Internet: <URL:http://citeseer.nj.nec.com/cache/pape rs/cs/78/http:zSzzSzwww.cs.cmu.eduzSz~jabz SzpubszSzboyan.anonymizer.pdf/the-anonymiz er.pdf> [retrieved on 2003-02-14]

## Description

The present invention pertains to accessing the Internet, and more particularly to accessing the Internet anonymously to carry out transactions including making purchases.

Although communication over the Internet can be encrypted, the Internet is not a secure network. Unencrypted communications can be overheard, and when those communications convey confidential information, there is the potential for harm.

But regardless of whether a communication is encrypted, the environment at an intended recipient of an Internet communication may not be secure, If an Internet user visits a site on the Internet, there is a chance that the information that the user visited the site will be made available to others or otherwise used by people at the site in ways the user would not approve.

What is needed is a way for a user to visit a site on the Internet anonymously. But without paying, an Internet user cannot take advantage of all that is offered through an Internet site, such as access to information from a site, or the opportunity to order merchandise through the site. Thus, what is further needed is a means for rendering or ensuring payment over the Internet to the operator of an Internet site in a way that will be accepted by sites on the Internet, without revealing the identity of the user making the payment.

In an article entitled "Design and Implementation of the Lucent Personalized Web Assistant (LPWA)" published by Information Sciences Research Center Bell Laboratories (XP-002231196), Bristol *et al*. describe a system for enabling a client, using an alias, to access services over the Internet offered by an Internet content provider operating an Internet content provider server. The system comprises a browser hosted by a computer operated by the client, for receiving graphical user interface screens and for communicating transactions indicated by the client. The transactions may include information that allows the alias to be associated with the transactions. The system further comprises a proxy server operated by a proxy responsive to the transactions for ensuring that each transaction is under the alias and for communicating the transactions to the Internet content provider over the Internet and further responsive to the graphic user interface screens directed to the alias for providing the graphical user interface screens to the browser.

In an article entitled "Anonymous Credit Cards" published in the proceedings of the 2nd ACM Conference on Computer and Communication Security held in Fairfax, Virginia, USA in November 1994, Low *et al*. describe a communications networking technique for funds transfer which combines the privacy of cash transactions with the security, record keeping and charging mechanisms of credit cards.

Accordingly, it is an object of the present invention to provide a means for an Internet user to visit sites on the Internet anonymously, to pay for merchandise made available through those sites anonymously, and to have the operator of an Internet site provide merchandise, services, funds, goods, information, etc., to a user without the operator learning the identity of the user who ordered the merchandise.

According to a first aspect of the invention, there is provided a system for enabling a client, using an alias, to access services over the Internet offered by an Internet content provider (ICP) operating an ICP server, the system comprising: a) a browser hosted by a computer operated by the client, and arranged to receive graphical user interface (GUI) screens, and to communicate transactions indicated by the client, the transactions including information that allows the alias to be associated with the transactions; b) a proxy server operated by a proxy, responsive to the transactions, to ensure that each transaction is under the alias and to communicate the transactions to the ICP over the Internet, and further responsive to GUI screens directed to the alias, to provide the GUI screens to the browser; and c) said proxy server being further operable to process cookies coming from the client by replacing client identification data with corresponding alias data.

According to a second aspect of the invention, there is provided a method for enabling a client, using an alias, to access services over the Internet offered by an Internet content provider (ICP) operating an ICP server, the method comprising the steps of: a) having the client use a browser hosted by a computer; b) having the client receive with the browser graphical user interface (GUI) screens; c) having the client communicate transactions with the browser in response to the GUI screens; d) having a proxy operate a proxy server; e) having the proxy server receive the transactions communicated by the client; f) having the proxy server ensure that each transaction is under the alias and communicate the transactions to the ICP over the Internet to the ICP server; g) having the proxy server receive GUI screens from the ICP server and communicate to the browser any of the GUI screens directed to the alias; and h) having the proxy server process cookies coming from the client by replacing client information data with corresponding alias data.

For a better understanding of the invention and to show how the same may be carried into effect, reference will now be made, by way of example, to the accompanying drawings, in which:
Fig. 1 is a block diagram showing an Internet connectivity architecture according to an embodiment of the present invention;
Fig. 2 is a process flow diagram illustrating the principal interfaces of an embodiment of the present invention; and
Fig. 3 is a data flow diagram illustrating various communications over the Internet, according to an embodiment of the present invention.

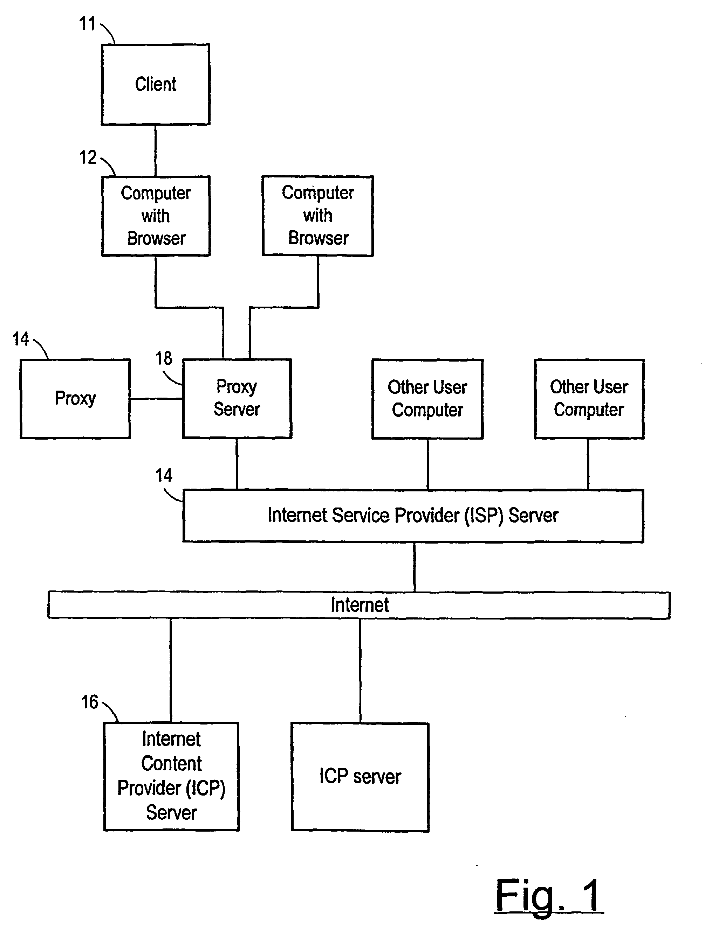

Referring now to Fig. 1, a client user **11** is shown operating a computer **12** executing an Internet browser application (not shown), but connected to a proxy server **18**, instead of directly to an Internet service provider (ISP) to access the Internet. The proxy server **18** is in turn connected to an ISP **15** to gain access to the Internet. (The proxy server **18** may itself be an ISP.) With this indirect connection to the Internet, the client user **11** gains indirect access to an Internet content provider (ICP) server **16**. The proxy server **18** is operated by a proxy **14**.

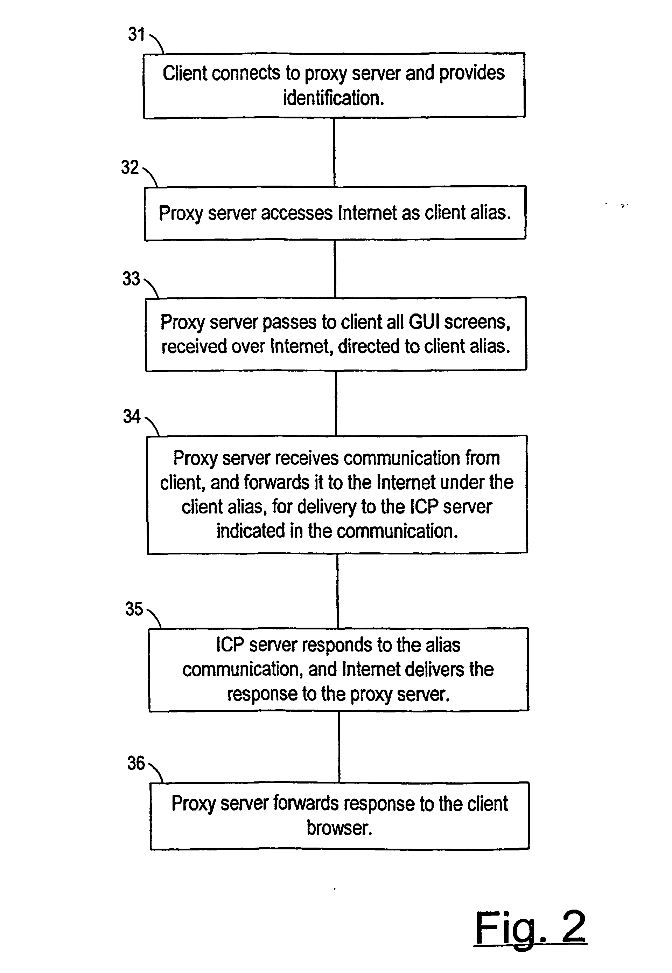

Referring now to Fig. 2, according to the present invention, to access sites on the Internet anonymously, the client **11** of the proxy **14**, in a step **31**, connects to the proxy server **18**, providing proof of identification. As will be explained in more detail below, the client will have already established with the proxy a line of credit or will have opened with the proxy an account holding funds, and will have provided other information needed for the proxy to provide its proxy services, also to be described in what follows.

In connecting to the proxy, the client uses a pre-agreed-upon alias, an alias created when the client first established with the proxy a line of credit or deposited funds with the proxy. In the preferred embodiment, the client will have deposited funds with the proxy, which the client could do anonymously. Alternatively, as indicated above, the client could establish with the proxy a line of credit, which would not be anonymous, however, the proxy could guarantee confidentiality of the database. Because of either an account with funds or a line of credit (e.g., a kind of charge card or credit card account), the client is said here to have a certain amount of purchasing power associated with an alias account having an alias account code. In one aspect of the present invention, the alias account code is a credit card number for a credit card issued by the proxy, or an agent of the proxy. But in all aspects of the present invention, there is an alias account code for a client account having a certain amount of purchasing power associated with an alias account maintained for the client by the proxy, or an agent of the proxy. The account code may also serve as a key that protects the account from multiple users of the account.

The client computer and proxy server can communicate over many different kinds of networks, including the public telephone system, with many kinds of protocols; the present invention is not intended to be restricted to any particular client computer/ proxy server connection. For example, the proxy may provide each client with communication software for communicating over a telephone line with the proxy. In another embodiment, the client computer and proxy server can be connected over a local area network, and the proxy can use the operating system hosted by the local area network to communicate with the client computer.

Once the client establishes a connection with the proxy server, in the preferred embodiment where the proxy server is not itself an ISP, in a step **32** the proxy server **18** accesses the Internet, as the client alias, through an ISP server **15**. Then the proxy server receives through the ISP server graphical user interface (GUI) screens, for display as part of a screen (a window) or as a full screen. The proxy server, in turn, in a step **33** passes the GUI screens to the client. The GUI screens can originate at the ISP server **15**, or at one or another ICP server.

Then in a step **34**, the client responds to a GUI screen originating at the ICP server **16**; the response is communicated to the proxy server, which in turn translates it into a response originating from the client alias and directs it to the ICP server **16** indicated in the client's response. When the ICP server **16** receives the client response, apparently from the client alias, it responds in turn with another GUI screen. In a step **36**, the proxy server **18** directs the response to the client computer **12**, which displays the GUI screen response for the client.

With these steps, a client is able to take advantage of any services offered over the Internet, provided the services can be provided completely over the Internet. If, however, the client wishes to order merchandise from the ICP, for the client to remain unknown to the ICP, there must be a "Ship To" address that does not connect the client with the merchandise.

On the Internet today, an ICP server will sometimes attempt to set a so-called *cookie* in the RAM of a computer hosting a browser accessing the ICP's Web site. The ICP server expects to have the browser return the cookie according to a standard protocol. (See, for example, U.S. Pat. No. 5,774,670 to Montulli.) In standing in place of a client, to provide effective access to the Internet, the proxy must allow for the setting and retrieving of cookies but without revealing in a cookie the identity of the client. To do this, the proxy simply passes all incoming cookies to the client but processes the cookies coming from the client (provided by the client's browser based on the Web site the client wants to access), replacing all client identification data with corresponding alias data, when possible. (If the client furnishes a social security number or a credit or charge card number for a credit or charge card issued by other than the proxy or the proxy's agent, there is no corresponding alias information the proxy can use in replacement.)

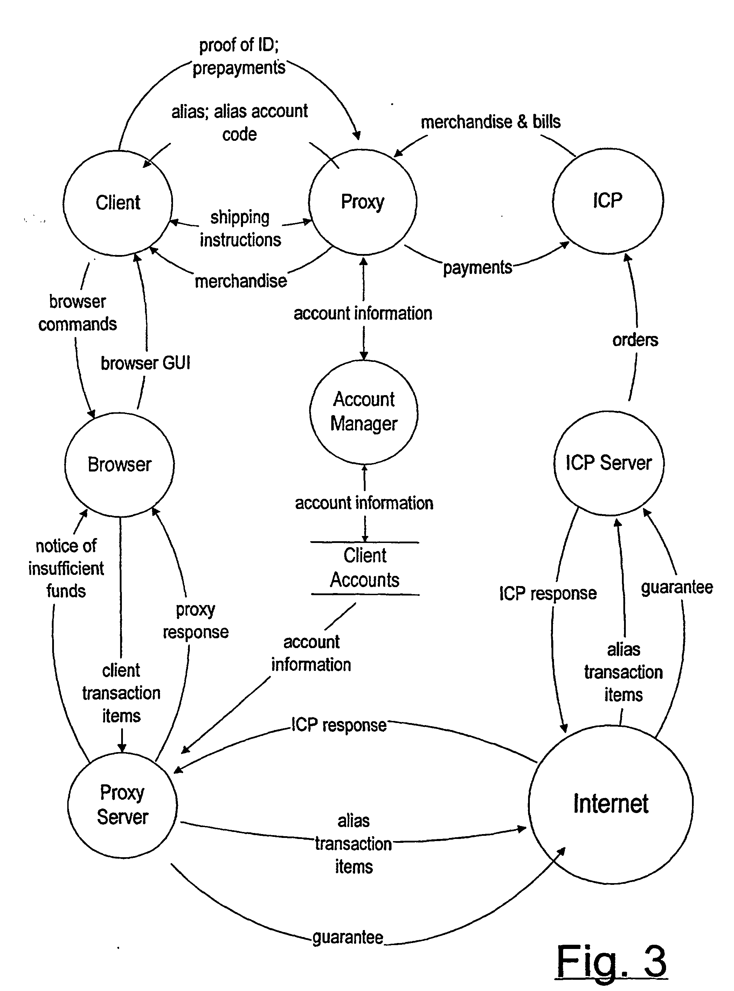

Referring now to Fig. 3, the preferred embodiment of the present invention is shown to include having the proxy make payments to an ICP, and accept merchandise from the ICP, on behalf of a client. Payments to the ICP are made based on the purchasing power of the client's alias account Thus, In this embodiment, a client is able to take full advantage of services offered through the Internet, including ordering and receiving merchandise from an ICP.

As shown in Fig. 3, to take advantage of the present invention, a client and proxy agree on an alias for the client, and the client establishes with the proxy an alias account having some purchasing power. In addition, in the preferred embodiment, the client provides Ship To information so that the proxy can receive merchandise on behalf of the client's alias, and redirect the merchandise to the client's Ship To address. Using an account manager (automated hardware and software system), the proxy then records all of this account information in an account for the client; the client's account information is recorded as a data store accessible by the account manager and also by the proxy server (automated hardware and software system).

After creating an account with the proxy, a client accesses the Internet through the proxy server, by first connecting to the proxy server as explained above. The proxy server then makes initial access to the Internet, as the client's alias, and receives from the Internet a response to its initial access. This response is a GUI screen, as explained above, enabling searching the Internet or asking for a connection to a particular Internet site. The proxy server provides this GUI screen to the client according to the protocol expected by the client's browser software. In the preferred embodiment, the client's browser is the same browser software the client would use to access the Internet directly, not through the proxy server. In another embodiment of the present invention, the client browser software is not Internet-capable, but specially developed software for receiving GUI screens from the proxy server and communicating back to the proxy server responses to the GUI screens, i.e., actions the client wishes to take on the Internet, and other communications, in general referred to as transaction items.

Whether the client's browser is a generic Internet-capable browser or special proxy-communication software, in response to the GUI screens communicated by the proxy server, the client uses the browser to express the transaction items for communication to the Internet by the proxy server. Transaction items directed to a particular ICP server result in the ICP providing a response to the alias. The proxy server, as the client alias, receives the ICP response and communicates it to the client browser (along with any cookies).

In the preferred embodiment, if by communicating transaction items to an ICP, a client has ordered merchandise from the ICP, the proxy server automatically refers to the client's alias account information, to determine whether there is sufficient purchasing power to pay for the merchandise. If not, the proxy server sends the client browser a notice of insufficient purchasing power, and does not communicate the order to the ICP server.

If the client's purchasing power is sufficient, the proxy server guarantees payment to the ICP by sending a guarantee over the Internet to the ICP server. In turn, the ICP sends the merchandise and a bill to the proxy in the name of the client's alias, because in this embodiment, the client has the proxy receive all merchandise the client orders, so as to remain anonymous.

To provide these guarantees, the proxy server must do two things: first, recognize when the client is ordering merchandise anonymously; and second, determine how much the merchandise costs. To recognize when the client is ordering merchandise anonymously, the proxy server, in the preferred embodiment, parses for ordering information the transaction items intended to be communicated to ICP's by the client. (This ordering information is often communicated through cookies.) In parsing for ordering information, the proxy merely examines the transaction items communicated by the client for the alias account code provided by the client in response to a request from an ICP for a credit card number. By using the alias account code, the client signals to the proxy that the client wants the proxy to order and receive merchandise on behalf of the client.

To determine how much the merchandise costs, in the preferred embodiment, the proxy server examines recent transactions from the client and recent GUI screens from the ICP to whom the alias account code is directed. If the proxy server cannot automatically determine the cost of the merchandise by this examination, the proxy server will query the client for a cost. In another aspect of the present invention, the proxy server simply queries the client for a fee upon discovering that the alias account code has been used. The above may also be used to authorize release of funds from an account.

In the usual application, where the client computer is connected to the proxy server by a private telephone line, it is unlikely that another party will discover the alias account code issued to the client. In this application, the alias account code is not usually encrypted. For a connection over the Internet, however, the alias account code is more vulnerable, and its encryption is recommended. The present invention, however, is not intended to be in any way limited in this regard.

In another embodiment, instead of using the alias account code merely as a signal for the proxy to check for funds, the client in fact receives a credit card from the proxy, and the proxy extends credit to the client, up to some pre-determined credit limit. In this embodiment, the proxy usually knows the identity of the client throughout the client-proxy relationship. As noted above, in the preferred embodiment, where the client deposits funds with the proxy, the client can be unknown even to the proxy; the client simply never provides to the proxy actual identification.

In another aspect of the present invention, the client may choose to order merchandise without using the alias account code, either as an actual credit card number (issued by the proxy) or as a code to the proxy. The client could use an ordinary credit card, revealing the client's identity, or one or another form of digital cash payment. Using some forms of digital cash, and acting through the proxy of the present invention, would keep the client's identity unknown to the ICP.

In another form of this invention, the proxy would make direct electronic payment from the account it holds and thus provide this service as part of the package.

While the invention has been particularly shown and described with reference to a preferred embodiment, it would be understood by those skilled in the art that various changes in form and detail may be made therein without departing from the scope of the invention.

## Claims

1. A system for enabling a client (11), using an alias, to access services over the Internet offered by an Internet content provider (ICP) operating an ICP server (16), the system comprising:
a) a browser (12) hosted by a computer operated by the client (11), and arranged to receive graphical user interface (GUI) screens, and to communicate transactions indicated by the client (11), the transactions including information that allows the alias to be associated with the transactions;
b) a proxy server (18) operated by a proxy (14), responsive to the transactions, arranged to ensure that each transaction is under the alias and to communicate the transactions to the ICP (16) over the Internet, and further responsive to GUI screens directed to the alias, arranged to provide the GUI screens to the browser (12); and
c) said proxy server (18) being further operable to process cookies coming from the client by replacing client identification data with corresponding alias data.

2. The system claimed in Claim 1, wherein the proxy server is arranged to receive a key from the client to enable the client to access service.

3. The system claimed in Claim 1, wherein the proxy is arranged to provide the client with an alias account code associated with an alias account of the client with the proxy, and wherein the client computer (12) is arranged to use the alias account code to purchase merchandise from the ICP (16) when the client (11) wants to remain anonymous; and further wherein the proxy server (18) is arranged to examine transactions communicated by the browser (12) for the alias account code

4. The system claimed in Claim 3, wherein upon finding that the client has used the alias account code in a transaction, the proxy server (18) is operable to consult the alias account to determine whether the client (11) has sufficient purchasing power to pay for the merchandise, and wherein if the client is determined to have sufficient purchasing power to pay for the merchandise, the proxy server (18) is operable to communicate a guarantee of payment to the ICP (16) for the merchandise.

5. The system claimed in Claim 4, wherein the proxy server (18) is operable to accept merchandise ordered by the client (11) under the alias, and to provide the merchandise to the client according to instructions received from the client.

6. A method for enabling a client (11), using an alias, to access services over the Internet offered by an Internet content provider (ICP) operating an ICP server (16), the method comprising the steps of:
a) having the client (11) use a browser hosted by a computer (12);
b) having the client (11) receive with the browser graphical user interface (GUI) screens;
c) having the client (11) communicate transactions with the browser in response to the GUI screens;
d) having a proxy (14) operate a proxy server (18);
e) having the proxy server (18) receive the transactions communicated by the client (11);
f) having the proxy server (18) ensure that each transaction is under the alias and communicate the transactions to the ICP over the Internet to the ICP server (16);
g) having the proxy server (18) receive GUI screens from the ICP server (16) and communicate to the browser any of the GUI screens directed to the alias; and
h) having the proxy server (18) process cookies coming from the client by replacing client information data with corresponding alias data.

7. The method claimed in Claim 6, wherein the client (11) receives from the proxy (14) an alias account code for an alias account the client establishes with the proxy, and wherein the client (11) uses the alias account code to purchase merchandise from the ICP (16) when the client wants to remain anonymous; and further wherein the proxy (14) examines transactions communicated by the browser for the alias account code.

8. The method claimed in Claim 7, wherein the account code is a key that protects the account from multiple users of the account.

9. The method claimed in Claim 7, wherein upon finding that the client (11) has used the alias account code in a transaction, the proxy server (18) consults an account maintained by the proxy (14) for the client (11) to determine whether the client has sufficient purchasing power to pay for the merchandise, and wherein if the client (11) is determined to have sufficient purchasing power to pay for the merchandise, the proxy server (18) communicates a guarantee of payment to the ICP (16) for the merchandise.

10. The method claimed in Claim 9, wherein the proxy (14) accepts merchandise ordered by the client (11) under the alias, and provides the merchandise to the client according to instructions received from the client.

## Patentansprüche

1. System zum Ermöglichen, dass ein Client (11) unter Verwendung eines Alias-Namens auf Dienste über das Internet zugreifen kann, die von einem Internetinhaltsanbieter (ICP) angeboten werden, der einen ICP-Server (16) betreibt, wobei das System umfasst:
a) einen Browser (12), der in einem Computer vorgesehen ist, welcher von dem Client (11) betrieben wird, und der eingerichtet ist, graphische Benutzerschnittstellen-Bildschirminhalte (GUI-Bildschirminhalte) zu empfangen und Transaktionen zu übermitteln, die von dem Client (11) angegeben werden, wobei die Transaktionen Informationen umfassen, die es erlauben, den Alias-Namen mit den Transaktionen in Verbindung zu bringen;
b) einen von einem Proxy (14) betriebenen Proxy-Server (18), der auf die Transaktionen anspricht und eingerichtet ist, sicherzustellen, dass jede Transaktion unter dem Alias-Namen erfolgt, und die Transaktionen an den ICP (16) über das Internet zu übermitteln, und der ferner auf an den Alias-Namen gerichtete GUI-Bildschirminhalte anspricht und eingerichtet ist, dem Browser (12) die GUI-Bildschirminhalte zur Verfügung zu stellen; und
c) wobei der Proxy-Server (18) ferner zur Verarbeitung von Cookies betrieben werden kann, die von dem Client herrühren, indem Client-Identifikationsdaten durch entsprechende Alias-Daten ersetzt werden.

2. System nach Anspruch 1, wobei der Proxy-Server eingerichtet ist, einen Schlüssel von dem Client zu empfangen, um dem Client Zugang zu Diensten zu ermöglichen.

3. System nach Anspruch 1, wobei der Proxy eingerichtet ist, dem Client einen Alias-Kontocode zur Verfügung zu stellen, der zu einem Alias-Konto des Client bei dem Proxy gehört, und wobei der Client-Computer (12) eingerichtet ist, den Alias-Kontocode zum Kauf von Ware von dem ICP (16) zu verwenden, wenn der Client (11) anonym bleiben möchte; und wobei der Proxy-Server (18) ferner eingerichtet ist, Transaktionen zu überprüfen, die von dem Browser (12) für den Alias-Kontocode übermittelt wurden.

4. System nach Anspruch 3, wobei der Proxy-Server (18) bei Feststellung, dass der Client den Alias-Kontocode in einer Transaktion verwendet hat, zum Abfragen des Alias-Kontos betreibbar ist, um zu bestimmen, ob der Client (11) ausreichend Kaufkraft besitzt, um die Ware zu bezahlen, und wobei, wenn bestimmt wird, dass der Client ausreichend Kaufkraft besitzt, um die Ware zu bezahlen, der Proxy-Server (18) betreibbar ist, eine Zahlungsgarantie für die Ware an den ICP (16) zu übermitteln.

5. System nach Anspruch 4, wobei der Proxy-Server (18) betreibbar ist, von dem Client (11) unter dem Alias-Namen bestellte Ware anzunehmen und dem Client die Ware in Übereinstimmung mit von dem Client empfangenen Anweisungen zur Verfügung zu stellen.

6. Verfahren zum Ermöglichen, dass ein Client (11) unter Verwendung eines Alias-Namens auf Dienste über das Internet zugreifen kann, die von einem Internetinhaltsanbieter (ICP) angeboten werden, der einen ICP-Server (16) betreibt, wobei das Verfahren die Schritte umfasst:
a) Veranlassen des Client (11), einen in einem Computer (12) vorgesehenen Browser zu verwenden;
b) Veranlassen des Client (11), mit dem Browser graphische Benutzerschnittstellen-Bildschirminhalte (GUI-Bildschirminhalte) zu empfangen;
c) Veranlassen des Client (11), Transaktionen mit dem Browser als Reaktion auf die GUI-Bildschirminhalte zu übermitteln;
d) Veranlassen eines Proxy (14), einen Proxy-Server (18) zu bedienen;
e) Veranlassen des Proxy-Servers (18), die von dem Client (11) übermittelten Transaktionen zu empfangen;
f) Veranlassen des Proxy-Servers (18), sicherzustellen, dass jede Transaktion unter dem Alias-Namen erfolgt, und die Transaktionen an den ICP über das Internet an den ICP-Server (16) zu übermitteln;
g) Veranlassen des Proxy-Servers (18), GUI-Bildschirminhalte von dem ICP-Server (16) zu empfangen und dem Browser jegliche an den Alias-Namen gerichteten GUI-Bildschirminhalte zu übermitteln; und
h) Veranlassen des Proxy-Servers (18), Cookies zu verarbeiten, die von dem Client herrühren, indem Client-Informationsdaten durch entsprechende Alias-Daten ersetzt werden.

7. Verfahren nach Anspruch 6, wobei der Client (11) von dem Proxy (14) einen Alias-Kontocode für ein Alias-Konto empfängt, das der Client bei dem Proxy einrichtet, und wobei der Client (11) den Alias-Kontocode zum Kauf von Ware von dem ICP (16) verwendet, wenn der Client anonym bleiben möchte; und wobei der Proxy (14) ferner Transaktionen überprüft, die von dem Browser für den Alias-Kontocode übermittelt werden.

8. Verfahren nach Anspruch 7, wobei der Alias-Kontocode ein Schlüssel ist, der das Konto vor mehreren Nutzern des Kontos schützt.

9. Verfahren nach Anspruch 7, wobei der Proxy-Server (18) bei Feststellung, dass der Client (11) den Alias-Kontocode in einer Transaktion verwendet hat, ein Konto abfragt, das von dem Proxy (14) für den Client (11) unterhalten wird, um zu bestimmen, ob der Client ausreichend Kaufkraft besitzt, um die Ware zu bezahlen, und wobei, wenn bestimmt wird, dass der Client (11) ausreichend Kaufkraft besitzt, um die Ware zu bezahlen, der Proxy-Server (18) eine Zahlungsgarantie für die Ware an den ICP (16) übermittelt.

10. Verfahren nach Anspruch 9, wobei der Proxy (14) die von dem Client (11) unter dem Alias-Namen bestellte Ware annimmt und die Ware dem Client in Übereinstimmung mit von dem Client empfangenen Anweisungen zur Verfügung stellt.

## Revendications

1. Système destiné à permettre à un client (11), utilisant un pseudonyme, d'accéder à des services sur Internet offerts par un fournisseur de contenu Internet (ICP) utilisant un serveur ICP (16), le système comprenant :
a) un navigateur (12) hébergé par un ordinateur actionné par le client (11), et agencé pour recevoir des écrans d'interface utilisateur graphique (GUI), et pour communiquer des transactions indiquées par le client (11), les transactions comprenant des informations qui permettent au pseudonyme d'être associé aux transactions ;
b) un serveur proxy (18) actionné par un proxy (14), répondant aux transactions, agencé pour garantir que chaque transaction est faite sous le pseudonyme et pour communiquer les transactions à l'ICP (16) par Internet, et répondant en outre à des écrans GUI destinés au pseudonyme, agencé pour fournir les écrans GUI au navigateur (12) ; et
c) ledit serveur proxy (18) pouvant en outre être actionné pour traiter des cookies provenant du client en remplaçant les données d'identification du client par les données du pseudonyme correspondant.

2. Système selon la revendication 1, dans lequel le serveur proxy est agencé pour recevoir une clé d'un client afin de permettre au client d'accéder au service.

3. Système selon la revendication 1, dans lequel le proxy est agencé pour fournir au client un code de compte de pseudonyme associé à un compte de pseudonyme du client avec le proxy, et dans lequel l'ordinateur du client (12) est agencé pour utiliser le code de compte de pseudonyme pour acheter des marchandises depuis l'ICP (16) lorsque le client (11) souhaite rester anonyme ; et dans lequel en outre le serveur proxy (18) est agencé pour examiner les transactions communiquées par le navigateur (12) pour le code de compte de pseudonyme.

4. Système selon la revendication 3, dans lequel, lorsque l'on découvre que le client a utilisé le code de compte de pseudonyme dans une transaction, le serveur proxy (18) peut être actionné pour consulter le compte de pseudonyme pour déterminer si le client (11) a un pouvoir d'achat suffisant pour payer la marchandise, et dans lequel, s'il est déterminé que le client a un pouvoir d'achat suffisant pour payer la marchandise, le serveur proxy (18) peut être actionné pour communiquer une garantie de paiement à l'ICP (16) pour la marchandise.

5. Système selon la revendication 4, dans lequel le serveur proxy (18) peut être actionné pour accepter une marchandise commandée par le client (11) sous le pseudonyme, et pour fournir la marchandise au client conformément à des instructions reçues de la part du client.

6. Procédé destiné à permettre à un client (11), utilisant un pseudonyme, d'accéder à des services sur Internet offerts par un fournisseur de contenu Internet (ICP) utilisant un serveur ICP (16), le procédé comprenant les étapes consistant à :
a) faire utiliser au client (11) un navigateur hébergé par un ordinateur (12) ;
b) faire recevoir au client (11) les écrans d'interface utilisateur graphique (GUI) avec le navigateur ;
c) faire communiquer au client (11) des transactions avec le navigateur en réponse aux écrans GUI ;
d) faire actionner un serveur proxy (18) au proxy (14) ;
e) faire recevoir au serveur proxy (18) les transactions communiquées par le client (11) ;
f) faire garantir au serveur proxy (18) que chaque transaction est faite sous le pseudonyme et faire communiquer les transactions à l'ICP par Internet au serveur ICP (16) ;
g) faire recevoir au serveur proxy (18) des écrans GUI provenant du serveur ICP (16) et communiquer au navigateur tous les écrans GUI destinés au pseudonyme ; et
h) faire traiter par le serveur proxy (18) des cookies provenant du client en remplaçant les données d'information du client par les données du pseudonyme correspondant.

7. Procédé selon la revendication 6, dans lequel le client (11) reçoit du proxy (14) un code de compte de pseudonyme pour un compte de pseudonyme que le client établit avec le proxy, et dans lequel le client (11) utilise le code de compte de pseudonyme pour acheter des marchandises auprès de l'ICP (16) lorsque le client souhaite rester anonyme ; et dans lequel en outre le proxy (14) examine les transactions communiquées par le navigateur pour le code de compte de pseudonyme.

8. Procédé selon la revendication 7, dans lequel le compte de pseudonyme est une clé qui protège le compte contre des utilisateurs multiples du compte.

9. Procédé selon la revendication 7, dans lequel, lorsque l'on découvre que le client (11) a utilisé le code de compte de pseudonyme dans une transaction, le serveur proxy (18) consulte un compte tenu par le proxy (14) pour le client (11) pour déterminer si le client (11) a un pouvoir d'achat suffisant pour payer la marchandise, et dans lequel, s'il est déterminé que le client (11) a un pouvoir d'achat suffisant pour payer la marchandise, le serveur proxy (18) communique une garantie de paiement à l'ICP (16) pour la marchandise.

10. Procédé selon la revendication 9, dans lequel le proxy (14) accepte une marchandise commandée par le client (11) sous le pseudonyme, et fournit la marchandise au client conformément à des instructions reçues de la part du client.
